# EUROPÄISCHE PATENTSCHRIFT

(11) **EP 3 419 872 B1**
(45) Veröffentlichungstag und Bekanntmachung des Hinweises auf die Patenterteilung: **06.04.2022**
(21) Anmeldenummer: 17707240.2
(22) Anmeldetag: 23.02.2017
(51) Int. Cl.: B60T 8/17

(54) **VERFAHREN UND VORRICHTUNG ZUR STEUERUNG ODER REGELUNG EINER BREMSANLAGE**
METHOD AND DEVICE FOR THE OPEN-LOOP OR CLOSED-LOOP CONTROL OF A BRAKING SYSTEM
PROCÉDÉ ET DISPOSITIF POUR COMMANDER OU RÉGULER UN DISPOSITIF DE FREINAGE

(30) Priorität: 25.02.2016 DE 102016103352
(43) Veröffentlichungstag der Anmeldung: 02.01.2019
(73) Patentinhaber: KNORR-BREMSE Systeme für Schienenfahrzeuge GmbH, 80809 München (DE)
(72) Erfinder: VOIGTLÄNDER-TETZNER, Roland, 85591 Vaterstetten (DE); STANKO, Michael, 80999 München (DE)
(86) Internationale Anmeldenummer: PCT/EP2017/054114
(87) Internationale Veröffentlichungsnummer: WO 2017/144562

(56) Entgegenhaltungen:
- EP-A2- 1 902 918
- DE-A1- 19 510 755
- DE-A1-102006 057 065
- DE-A1-102011 052 545
- DE-A1-102011 110 053
- DE-A1-102012 203 132
- DE-A1-102014 102 881

## Beschreibung

Die vorliegende Erfindung betrifft ein Verfahren und eine Vorrichtung zur Steuerung oder Regelung einer Bremsanlage, insbesondere einer Bremsanlage eines Schienenfahrzeugs. Sie betrifft ferner eine Bremsanlage und ein Schienenfahrzeug mit einer solchen Steuerungs- oder Regelungsvorrichtung. Außerdem betrifft sie ein computer-lesbares Speichermedium mit einem entsprechenden Programmcode und ein Computerprogramm mit entsprechenden Codemitteln.

Schienenfahrzeuge sind in der Regel mit einer Bremsanlage ausgestattet, die mehrere verschiedene Bremssysteme umfasst, die in den verschiedenen Betriebssituationen zum Einsatz kommen. Zu den üblichen Bremssystemen zählen insbesondere Druckluftbremsen, elektropneumatische Bremsen (EP), aerodynamische Bremsen, elektrodynamische Bremsen (ED), Retarderbremsen bei Dieselfahrzeugen, Magnetschienenbremsen (Mg) und Wirbelstrombremsen (WB). Die elektropneumatische Bremse wird zum Beispiel als eine Zusatzeinrichtung zur Ansteuerung der Druckluftbremse zum gleichzeitigen Bremsen oder Lösen aller Bremsaktuatoren eines Wagens eines Schienenfahrzeugs oder auch mehrerer oder aller Wägen eines Schienenfahrzeugs eingesetzt. Bei den Druckluftbremsen wird zudem zwischen direkt und indirekt wirkenden Bremsen unterschieden.

Schnellbremsungen, zu denen im Rahmen der Erfindung alle Arten von Schnell-, Zwangs- und Notbremsungen gehören sollen, müssen mit einem hohen Sicherheitsniveau durchgeführt werden. In Bremsanlagen ist daher zu unterscheiden zwischen Bremssystemen, die ein die Anforderungen einer Schnellbremsung erfüllendes hohes Sicherheitsniveau aufweisen (auf das Bremsgewicht angerechnete Bremsen), und Bremssystemen mit einem niedrigeren Sicherheitsniveau (nicht anrechenbare Bremsen). Zu den in diesem Sinne hochsicheren Bremssystemen zählen insbesondere hydraulisch, pneumatisch oder elekropneumatisch betätigte Reibungsbremsen (Hydraulik-Reibungsbremse, Druckluft-Reibungsbremse, P/EP-Reibungsbremse oder nachfolgend allgemein kurz als "Reibungsbremse" bezeichnet). In heutigen Schienenfahrzeugen können bei der Schnellbremsung neben der Reibungsbremse zusätzliche Bremssysteme (zusätzlich anrechenbar) eingesetzt werden. Die Reibungsbremse wird bei der Schnellbremsung immer aktiviert und ist damit zwangsläufig einem Verschleiß unterworfen.

In herkömmlichen Bremsanlagen werden die Bremssysteme für eine Schnellbremsung so angesteuert, dass die hochsichere Reibungsbremse aktiviert wird und die nicht anrechenbaren Bremssysteme mit niedrigem oder sogar ohne Sicherheitsniveau deaktiviert werden. Auf diese Weise soll ein hohes Sicherheitsniveau garantiert werden. Nachteilig an diesem herkömmlichen Steuerungsverfahren ist jedoch, dass im Fall der Schnellbremsung die verschleißarmen und unter Umständen Energie rückspeisenden Bremssysteme deaktiviert werden und einzig die einem Verschleiß unterworfene Reibungsbremse aktiv ist.

Die DE 10 2011 052 545 A1, die die Merkmale der Oberbegriffe der unabhängigen Ansprüche offenbart, beschreibt ein Verfahren und eine Vorrichtung zur Ansteuerung einer Bremseinrichtung eines Fahrzeugs, insbesondere eines Schienenfahrzeugs.

Der Erfindung liegt deshalb die Aufgabe zugrunde, ein verbessertes Verfahren und eine verbesserte Vorrichtung zur Steuerung oder Regelung einer Bremsanlage bereitzustellen, die einen möglichst verschleißarmen Betrieb der Bremsanlage ermöglichen.

Diese Aufgabe wird gelöst durch die Lehre der unabhängigen Ansprüche. Vorteilhafte Ausgestaltungen der Erfindung sind Gegenstand der abhängigen Ansprüche.

Bei dem erfindungsgemäßen Verfahren zur Steuerung oder Regelung einer Bremsanlage, die wenigstens ein erstes Bremssystem, das ein die Anforderungen einer Schnellbremsung erfüllendes hohes Sicherheitsniveau aufweist, und wenigstens ein zweites Bremssystem mit einem niedrigeren Sicherheitsniveau aufweist, wird nach dem Auslösen einer Schnellbremsung zunächst wenigstens ein zweites Bremssystem aktiviert. Danach wird wenigstens ein erstes Bremssystem aktiviert, wenn eine durch die Bremsanlage erzeugte Bremswirkung einen Schwellenwert unterschreitet, wobei dieser Schwellenwert an eine aktuell erreichbare Bremswirkung der Bremssysteme dynamisch angepasst wird.

Die erfindungsgemäße Vorrichtung zur Steuerung oder Regelung einer Bremsanlage, die wenigstens ein erstes Bremssystem, das ein die Anforderungen einer Schnellbremsung erfüllendes hohes Sicherheitsniveau aufweist, und wenigstens ein zweites Bremssystem mit einem niedrigeren Sicherheitsniveau aufweist, weist eine Einrichtung zum Aktivieren wenigstens eines zweiten Bremssystems nach dem Auslösen einer Schnellbremsung und Aktivieren wenigstens eines ersten Bremssystems, wenn eine durch die Bremsanlage erzeugte Bremswirkung einen Schwellenwert unterschreitet, und eine Einrichtung zum dynamischen Anpassen des Schwellenwerts an eine aktuell erreichbare Bremswirkung der Bremssysteme auf.

Im Gegensatz zu herkömmlichen Bremsanlagen, bei denen im Fall einer Schnellbremsung ausschließlich die hochsicheren Reibungsbremsen aktiviert werden, schlägt die vorliegende Erfindung vor, nach dem Auslösen einer Schnellbremsung zunächst wenigstens ein zweites Bremssystem zu aktivieren und danach wenigstens ein erstes Bremssystem nur dann zu aktivieren, wenn eine durch die Bremsanlage erzeugte Bremswirkung einen Schwellenwert unterschreitet, wobei dieser Schwellenwert fortlaufend an eine erreichbare Bremswirkung, d.h. an eine unter den Umgebungsbedingungen aktuell real erreichbare Bremswirkung oder tatsächlich umsetzbare Bremskraft der Bremssysteme, insbesondere der zweiten Bremssysteme angepasst wird. Auf diese Weise ist es möglich, in der Schnellbremsung auch Bremssysteme mit einem niedrigeren Sicherheitsniveau einzusetzen, die im Allgemeinen verschleißarm und unter Umständen Energie rückspeisend arbeiten. Die hochsicheren Bremssysteme, die üblicherweise einem Verschleiß unterliegen, werden erst zu einem späteren Zeitpunkt eingesetzt bzw. zugeschaltet, wenn dies als erforderlich und zielführend beurteilt wird. Insgesamt kann so der Verschleiß der Bremsanlage reduziert werden, ohne das gewünschte Sicherheitsniveau einzuschränken.

Mit anderen Worten wird mit der Erfindung eine kostengünstige Möglichkeit geschaffen, heutige Bremssysteme ohne Änderung an diesen Bremssystemen im hoch sicherheitsrelevanten Betriebsmodus der Schnellbremsung einsetzen zu können, obwohl diese Bremssysteme (insbesondere deren Elektronikanteile) nicht für dieses Sicherheitsziel entwickelt wurden und obwohl die Wirkung oder Aktivierung dieser Bremssysteme durch weitere komplexe Regelungssysteme wie beispielsweise eine Gleitschutzeinrichtung zusammen mit Umgebungsbedingungen (wie beispielsweise Kraftschluss Rad/Schiene) beeinflusst wird.

Zu den hochsicheren Bremssystemen, deren Sicherheitsniveau die Anforderungen einer Schnellbremsung erfüllt, zählen in diesem Zusammenhang insbesondere die eingangs bereits genannten Reibungsbremsen.

Die vorliegende Erfindung basiert insbesondere auf den folgenden Überlegungen: Einen Nachteil bei herkömmlichen Bremsanlagen stellt die feste Vorgabe der Verwendung der hochsicheren, aber verschleiß-behafteten Reibungsbremsen für die Schnellbremsung dar. Um aber dennoch nicht anrechenbare Bremssysteme in der Schnellbremsung nutzen zu können, ist mindestens eine hochsichere Überwachung mit aktiver Rückhaltung der hochsicheren Reibungsbremse und dafür ein aussagekräftiges Sicherheitskriterium (z.B. Verzögerung) notwendig. Dabei würden im einfachsten Fall zunächst sich ändernde externe Einflüsse (wie zum Beispiel Umwelt, Witterungsbedingungen) unberücksichtigt bleiben, die einen wesentlichen Einfluss auf die erreichbare Bremswirkung der Bremsanlage haben können. Das bedeutet für eine Bremsanlage eines Schienenfahrzeugs, dass das hochsichere Überwachungssystem in Unkenntnis von externen Einflüssen, die zum Beispiel schlechte Haftwerte und einhergehend eine schlechte Verzögerung (mit einhergehender Unterschreitung eines beispielsweisen Schwellwertes "Mindest-Verzögerung") bewirken können, die zusätzlichen Bremssysteme mit niedrigerem bzw. ohne Sicherheitsniveau (insbesondere ED-Bremsen) deaktivieren und einzig die angerechnete Druckluft-Reibungsbremse aktivieren muss. Hierdurch wird zwar das gewünschte Sicherheitsniveau eingehalten, jedoch der Vorteil hinsichtlich verschleißarmer Bremsung (Rekuperation / Widerstandsbremsung) wieder aufgegeben, obwohl kein Ausfall dieser Bremssysteme vorliegt. Damit wird systematisch und über Gebühr die Verfügbarkeit solcher verschleißfreien Bremssysteme reduziert.

Mit dem erfindungsgemäßen Lösungsvorschlag wird bei einer unzureichenden Bremswirkung durch die zweiten Bremssysteme mit niedrigerem Sicherheitsniveau zunächst die aktuell erreichbare Bremswirkung der Bremssysteme der Bremsanlage, d.h. der ersten und/oder der zweiten Bremssysteme, aller oder nur eines Teils der verfügbaren Bremssysteme, erfasst. Ergibt sich dabei eine Herabsetzung der erreichbaren Bremswirkung, zum Beispiel aufgrund einer reduzierten Haftung zwischen Rad und Schiene, und wird beurteilt, dass ein Einsatz der hochsicheren Reibungsbremse die Bremswirkung auch nicht verbessern könnte (da es sich z.B. ebenfalls um eine kraftschlussabhängige Bremse handelt), soll im Ergebnis dann weiter das verschleißarme zweite Bremssystem genutzt werden. Nur wenn im Fall einer unzureichenden Bremswirkung zu erwarten ist, dass das hochsichere erste Bremssystem eine stärkere Bremswirkung erzielen kann, wird dieses erste Bremssystem aktiviert. Dies wird gemäß der Erfindung dadurch erreicht, dass im Fall einer herabgesetzten erreichbaren Bremswirkung der Schwellenwert für eine ausreichende Bremswirkung (Sicherheitskriterium) angepasst wird. Die Aktivierung des höchsicheren ersten Bremssystems kann dabei zusätzlich zu den aktiviert bleibenden zweiten Bremssystemen oder als Ersatz für die zweiten Bremssysteme erfolgen.

Die Entscheidungsschwelle für die Überführung der Bremsanlage in einen sicheren Zustand der Schnellbremsung ist dynamisch und wird an die Wirksamkeit der Bremssysteme angepasst. Die Umschaltung in einen sicheren "Backup"-Zustand (Aufhebung der Rückhaltung des ersten Bremssystems) erfolgt nur bei Verletzung des angepassten Schwellenwerts (Sicherheitskriterium). Erst wenn dieser fortwährend zum Beispiel an die Haftungssituation zwischen Schiene und Rad adaptierte Schwellenwert unterschritten wird, wird die Rückhaltung des hochsicheren ersten Bremssystems (z.B. pneumatische Druckluft-Reibungsbremse) aufgehoben und die Schnellbremsung somit weiterhin sichergestellt.

Durch den erfindungsgemäßen Lösungsansatz steigt die betriebliche Verfügbarkeit und Einsatzdauer der zweiten (insbesondere verschleißarmen) Bremssysteme im Vergleich zur Verwendung eines fest vorgegebenen Einsatzes des hochsicheren ersten Bremssystems. Dadurch sind u.U. ebenfalls vorhandene komplexe bremswegverkürzende Regel- und Hilfsfunktionen "länger" aktiv, unter Beherrschung insbesondere von systematischen Umwelteinflüssen wie beispielsweise Verschmutzung, Regen in Unterscheidung von ausgefallenen Einheiten oder (aus irgendwelchen Gründen) inaktiven Einheiten.

In einer vorteilhaften Ausgestaltung der Erfindung weist das Verfahren einen Schritt des Erfassens der aktuellen, durch die aktivierten zweiten Bremssysteme erzeugten Bremswirkung auf. Die Bremswirkung wird vorzugsweise anhand der Verzögerung zum Beispiel des Schienenfahrzeugs beurteilt.

In einer vorteilhaften Ausgestaltung der Erfindung weist das Verfahren einen Schritt des Erfassens der aktuell erreichbaren Bremswirkung oder umsetzbaren Bremskraft wenigstens eines der ersten Bremssysteme und/oder wenigstens eines der zweiten Bremssysteme auf. Die erreichbare Bremswirkung der Bremssysteme wird bei kraftschluss-abhängigen Bremsen vorzugsweise anhand eines Gleitzustandes beurteilt. Der Gleitzustand zwischen Rad und Schiene wird zum Beispiel beeinflusst durch den Zustand der Schiene, eine nasse/feuchte oder schmierende Schicht auf der Schiene (z.B. durch Regen, Schnee, Laub, etc.), einen Zustand des jeweiligen Bremssystems und dergleichen.

In einer weiteren vorteilhaften Ausgestaltung der Erfindung weist das Verfahren ferner einen Schritt des Erfassens von aktuell verfügbaren Bremssystemen auf. Dadurch kann vermieden werden, dass unnötigerweise ein zweites Bremssystem versucht wird zu nutzen, obwohl es schon ausgefallen ist oder bereits dektiviert wurde.

In einer weiteren vorteilhaften Ausgestaltung der Erfindung weist das Verfahren ferner einen Schritt des Erfassens von aktuellen Fahrzeugbetriebsdaten auf. Der Schwellenwert zum Aktivieren des wenigstens einen ersten Bremssystems kann dann vorzugsweise auch in Abhängigkeit von den erfassten Fahrzeugbetriebsdaten (z.B. Fahrzeuggeschwindigkeit, Fahrzeuggewicht, Streckenprofil, etc.) angepasst werden.

Gegenstand der Erfindung ist auch eine Bremsanlage für ein Schienenfahrzeug, die eine oben beschrieben Steuerungs- oder Regelungsvorrichtung der Erfindung aufweist.

In einer vorteilhaften Ausgestaltung der Erfindung kann die Steuerungs- oder Regelungsvorrichtung der Bremsanlage mehrere Bremssysteme überwachen und ansteuern. Durch die Überwachung von mehreren komplexen Regelfunktionen zeitgleich an zentraler Stelle durch ein aussagekräftiges Kriterium auf Fahrzeugebene können lokale Überwacher (verteilt über Fahrzeug/ Zug oder Wagen, welche bezüglich der Überwachung ebenfalls hochsicher sein müssen) eingespart werden. Damit kann der technische Aufwand massiv reduziert werden und kann die gesamte Systemverfügbarkeit weiter gesteigert werden. Auch kann bei gleichbleibendem Systemsicherheitsniveau die die Bremskraft erzeugende Einheit der zweiten Bremssysteme auf niedrigerem Sicherheitsniveau entwickelt werden, was ebenfalls zu Kosten- und Materialersparnissen führt.

Gegenstand der Erfindung ist ferner ein Schienenfahrzeug mit einer solchen Bremsanlage und/oder einer oben beschriebenen Steuerungs- oder Regelungsvorrichtung der Erfindung.

Gegenstand der Erfindung ist zudem ein computerlesbares Speichermedium, auf dem ein auf einem Computersystem ausführbarer Programmcode gespeichert ist, der bei seiner Ausführung ein oben beschriebenes Verfahren der Erfindung erzeugt.

Gegenstand der Erfindung ist schließlich auch ein Computerprogramm mit Codemitteln, die bei ihrer Ausführung auf einem Computersystem ein oben beschriebenes Verfahren der Erfindung erzeugen.

Obige sowie weitere Vorteile, Merkmale und Anwendungsmöglichkeiten der Erfindung werden aus der nachfolgenden Beschreibung eines Ausführungsbeispiels anhand der beiliegenden Zeichnungen besser verständlich. Darin zeigen, größtenteils schematisch:
- Fig. 1: den Aufbau einer Bremsanlage für ein Schienenfahrzeug gemäß einem Ausführungsbeispiel der Erfindung;
- Fig. 2: ein Flussdiagramm einer Routine zum Steuern oder Regeln der Bremsanlage von Fig. 1 im Betriebsmodus einer Schnellbremsung gemäß der vorliegenden Erfindung; und
- Fig. 3: ein Flussdiagramm einer anderen Routine zum Steuern oder Regeln der Bremsanlage von Fig. 1 im Betriebsmodus einer Schnellbremsung gemäß der vorliegenden Erfindung.

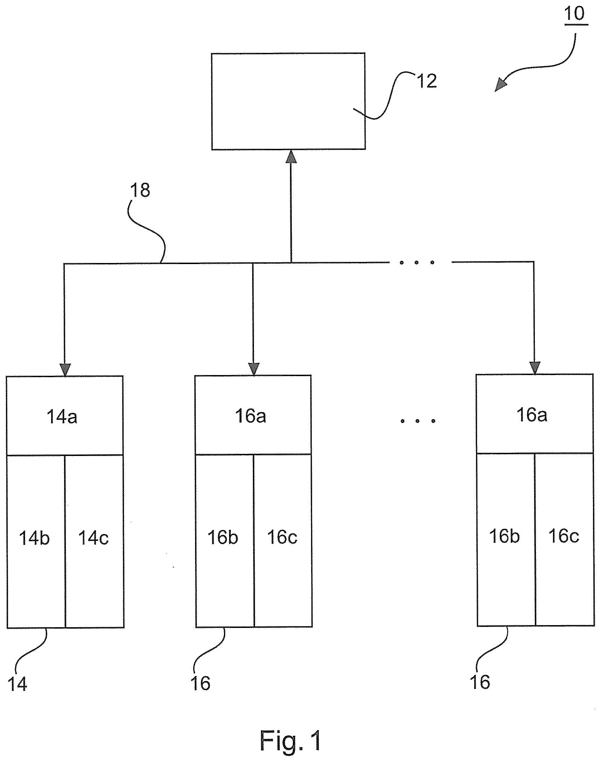

**Fig. 1** zeigt stark vereinfachten Aufbau einer erfindungsgemäßen Bremsanlage 10 für ein Schienenfahrzeug.

Das Schienenfahrzeug kann einen oder mehrere Wagen umfassen, jeweils mit oder ohne eigenen Antrieb. An einem Wagen können ein oder mehrere Drehgestelle vorgesehen sein, an denen jeweils ein oder mehrere Radachsen vorgesehen sein können, an denen jeweils zwei insbesondere starr miteinander verbundene Räder angebracht sein können. Die Bremseinrichtungen sind vorzugsweise zu einem schienenfahrzeugweiten Verbund vernetzt und werden vorzugsweise von einer gemeinsamen Steuerungs- oder Regelungsvorrichtung 12 überwacht und angesteuert.

Die Bremseinrichtungen der Bremsanlage 10 umfassen mehrere verschiedene Bremssysteme. Die Bremsanlage 10 weist dabei wenigstens ein erstes Bremssystem 14 auf, das ein die Anforderungen einer Schnellbremsung erfüllendes hohes Sicherheitsniveau aufweist und deshalb als hochsicher eingestuft wird. Bei dem ersten Bremssystem 14 handelt es sich beispielsweise um eine Druckluft-Reibungsbremse. Außerdem weist die Bremsanlage 10 mehrere zweite Bremssysteme 16 mit einem niedrigeren Sicherheitsniveau auf, bei denen es sich beispielsweise um Magnetschienenbremsen, Wirbelstrombremsen, elektrodynamische Bremsen, elektropneumatische Bremsen und/oder aerodynamische Bremsen handelt. Die verschiedenen Bremssysteme 14, 16 der Bremsanlage 10 können vorzugsweise unabhängig voneinander von der Steuerungs- oder Regelungsvorrichtung 12 angesteuert werden.

Jedes der hochsicheren ersten Bremssysteme 14 weist eine Regelungseinheit 14a, ein oder mehrere Sensoren 14b und einen oder mehrere Aktuatoren 14c auf. Jedes der zweiten Bremssysteme 16 weist eine Regelungseinheit 16a, ein oder mehrere Sensoren 16b und einen oder mehrere Aktuatoren 16c auf. Die Sensoren 14b, 16b dienen insbesondere dem Erfassen eines Gleitzustandes des Rades relativ zur Schiene, eines Zustandes der Schiene, eines Belages auf der Schiene (z.B. Regen, Laub, etc.) und dergleichen. Die Regelungseinheiten 14a, 16a der Bremssysteme 14, 16 sind über eine Informationsübertragungsverbindung (z.B. drahtlos, leitungsgebunden, pneumatisch, etc.) 18 mit der Steuerungs- oder Regelungsvorrichtung 12 verbunden.

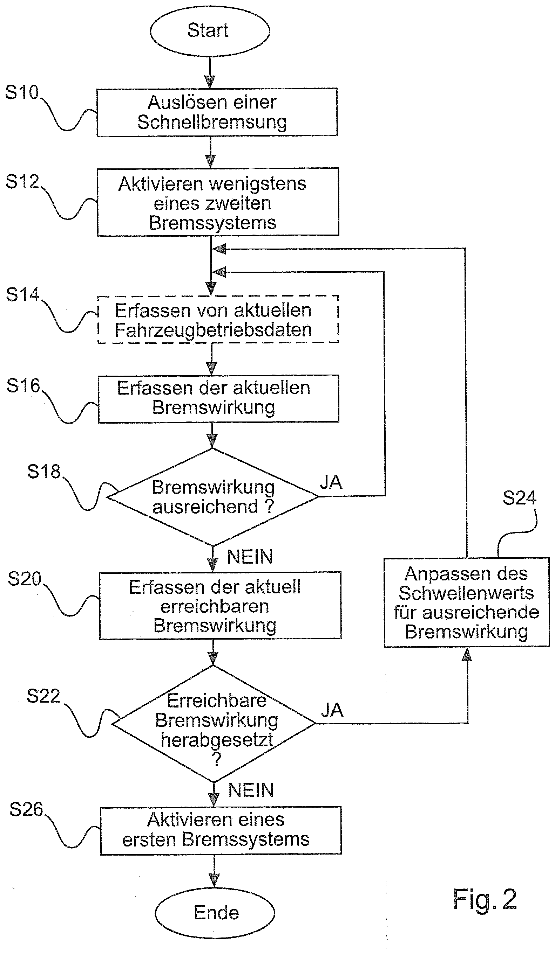

**Fig. 2** veranschaulicht eine beispielhafte Routine zur Steuerung oder Regelung der Bremsanlage 10 mittels der Steuerungs- oder Regelungsvorrichtung 12 für den Betriebsmodus einer Schnellbremsung.

Die Bremsanlage 10 des Schienenfahrzeugs wird in den Betriebsmodus der Schnellbremsung gesetzt, wenn in Schritt S10 eine Schnellbremsung ausgelöst wird. Dies kann zum Beispiel automatisch, durch den Fahrzeugführer, durch ein Begleitpersonal oder durch einen Fahrgast geschehen.

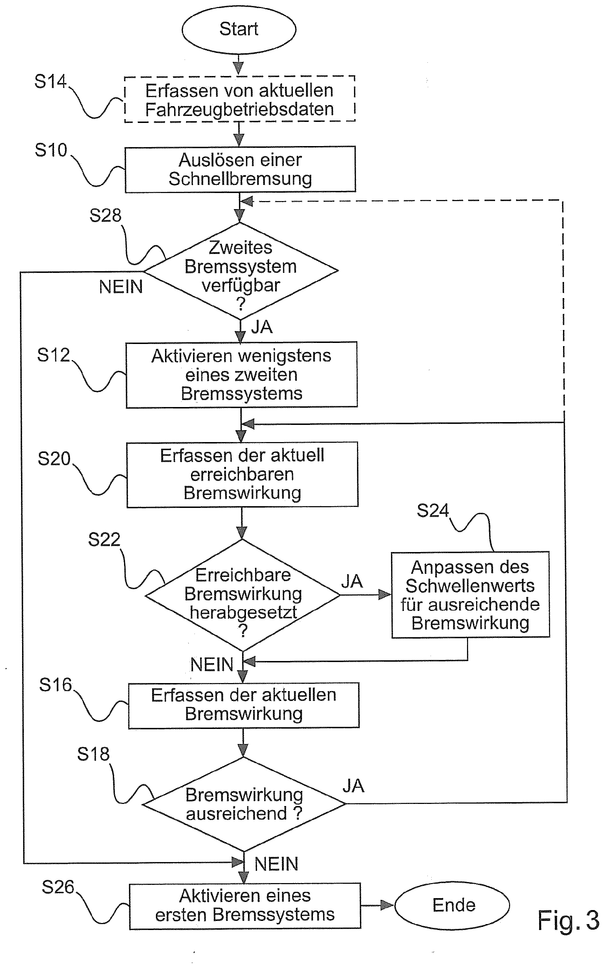

Im Betriebsmodus der Schnellbremsung wird in Schritt S12 von der Steuerungs- oder Regelungsvorrichtung 12 über die Informationsübertragungsverbindung 18 zunächst wenigstens ein zweites Bremssystem 16 aktiviert, zum Beispiel eine elektrodynamische Bremse oder eine Magnetschienenbremse, sofern ein solches verfügbar ist (vgl. Schritt S28 in Fig. 3). In einem Schritt S14 werden fortlaufend (d.h. unabhängig von der Prozedur Schnellbremsung) aktuelle Fahrzeugbetriebsdaten wie zum Beispiel die Fahrzeuggeschwindigkeit, das Fahrzeuggewicht, Streckenprofildaten, etc. erfasst. Außerdem werden fortlaufend in Bezug auf die Verfügbarkeit der Bremssysteme die aktuellen Betriebszustände (aktiv, deaktiviert, überhitzt, etc.) der Bremssysteme, die von den Bremssystemen erzielbaren Bremskräfte, Bremsleistungen oder Bremsmomente und dergleichen erfasst oder ermittelt.

In einem Schritt S16 wird die aktuelle Bremswirkung erfasst, welche durch das wenigstens eine aktivierte zweite Bremssystem 16 erzielt wird. Zu diesem Zweck wird zum Beispiel die aktuelle Fahrzeugverzögerung erfasst.

In einem nächsten Schritt S18 wird geprüft, ob die erfasst aktuelle Bremswirkung für die geforderte Schnellbremsung ausreichend ist. Zu diesem Zweck kann die Steuerungs- oder Regelungsvorrichtung 12 zum Beispiel die erfasste aktuelle Fahrzeugverzögerung mit einem Schwellenwert der Fahrzeugverzögerung vergleichen.

Falls die Bremswirkung in Schritt S18 als ausreichend beurteilt wird, wird der Betriebsmodus der Schnellbremsung unverändert fortgesetzt. D.h. zum Ausführen der Schnellbremsung bleibt das wenigstens eine zweite Bremssystem 16 aktiv, und auf eine Aktivierung eines hochsicheren ersten Bremssystems 14 wird verzichtet. Als Ergebnis kann die Schnellbremsung verschleißarm durchgeführt werden. Die Routine springt zurück zu den Erfassungsschritten S14 und S16.

Falls in Schritt S18 hingegen beurteilt wird, dass die aktuelle Bremswirkung nicht ausreichend ist, geht die Routine weiter zu einem Schritt S20. In diesem Schritt wird eine aktuell erreichbare Bremswirkung der Bremssysteme 14, 16 erfasst. Dabei können die erreichbare Bremswirkung nur der ersten Bremssysteme 14, die erreichbare Bremswirkung nur der zweiten Bremssysteme 16, die erreichbare Bremswirkung sowohl der ersten Bremssysteme 14 als auch der zweiten Bremssysteme 16 erfasst werden, wobei dies jeweils für alle vorhandenen Bremssysteme oder nur einen Teil der jeweiligen Bremssysteme gilt. Hierzu können insbesondere die aktuellen Gleitzustände hervorgerufen durch die aktiven Bremssysteme und/oder die zu erwartenden Gleitzustände hervorgerufen durch zusätzlich aktivierbare Bremssysteme erfasst oder ermittelt werden. Ferner können weitere Umgebungsbedingungen, wie beispielsweise eine Umgebungstemperatur, eine relative Luftfeuchtigkeit, eine Schienentemperatur und dergleichen erfasst werden, die einen Einfluss auf die erreichbare Bremswirkung der Bremssysteme haben können.

Die Steuerungs- oder Regelungsvorrichtung 12 beurteilt dann in Schritt S22, ob die erreichbare Bremswirkung der Bremssysteme herabgesetzt ist. Außerdem wird vorzugsweise auch das Maß der Herabsetzung des Schwellwertes bestimmt.

Falls der Schwellwert für die Bewertung der Bremssysteme nicht herabgesetzt ist, so muss die Steuerungs- oder Regelungsvorrichtung 12 aufgrund der zuvor als unzureichend festgestellten Bremswirkung davon ausgehen, dass die aktivierten zweiten Bremssysteme 16 für die Schnellbremsung nicht ausreichen und ein hochsicheres erstes Bremssystem 14 eine bessere Bremswirkung erzielen kann. Deshalb wird in Schritt S26 wenigstens ein erstes Bremssystem 14 aktiviert. Diese Aktivierung des ersten Bremssystems kann anstelle der zweiten Bremssysteme 16 erfolgen (d.h. die zuvor im Betriebsmodus der Schnellbremsung aktivierten zweiten Bremssysteme werden deaktiviert), oder zusätzlich zu den aktiven zweiten Bremssystemen 16 ("Blending").

Wird hingegen die erreichbare Bremswirkung der Bremssysteme in Schritt S22 als herabgesetzt beurteilt, so geht die Steuerungs- oder Regelungsvorrichtung 12 davon aus, dass die aktiven zweiten Bremssysteme 16 grundsätzlich ordnungsgemäß funktionieren und dass auch ein erstes Bremssystem 14 keine bessere Bremswirkung erzielen könnte. Dies kann zum Beispiel bei schlechten Haftwerten zwischen Rad und Schiene der Fall sein, da dann auch eine hochsichere Reibungsbremse nur eine reduzierte Bremswirkung entfalten kann (da ebenfall kraftschluss-abhängig). Gemäß der vorliegenden Erfindung soll bei dieser Konstellation darauf verzichtet werden, das hochsichere erste Bremssystem 14 zu aktivieren, sondern stattdessen weiter allein das verschleißarme zweite Bremssystem 16 aktiv bleiben.

In der Routine von Fig. 2 geht es bei dieser Konstellation weiter zu einem Schritt S24. In diesem Schritt S24 wird der Schwellenwert zum Beurteilen einer ausreichenden Bremswirkung in Schritt S18 angepasst. Beispielsweise wird der Schwellenwert für die Fahrzeugverzögerung im Fall schlechter Haftwerte zwischen Rad und Schiene verkleinert. Dies hat zur Folge, dass bei der nächsten Beurteilung in Schritt S18 trotz der geringer als erwünscht ausgefallenen Fahrzeugverzögerung beurteilt wird, dass diese (für den Moment) ausreichend ist. Die Steuerungs- oder Regelungsvorrichtung 12 kann so die Aktivierung des zweiten Bremssystems 16 beibehalten, ohne ein hochsicheres erstes Bremssystem 14 zu aktivieren. D.h. die Schritte S14, S16, S18 werden in einer Schleife wiederholt ausgeführt.

Erst wenn in dieser Schleife die Fahrzeugverzögerung weiter nachlässt, ändert sich das Ergebnis der Beurteilung in Schritt S18 auch trotz des angepassten Schwellenwerts und es kann zu einer weiteren Anpassung des Schwellenwerts (Schritt S24) oder zu einer Aktivierung eines ersten Bremssystems 14 (Schritt S26) kommen. Im Extremfall (falls z.B. alle Achsen gleiten) könnte nach diesem Prinzip der Schwellenwert zur Beurteilung einer ausreichenden Bremswirkung sogar bis auf Null reduziert werden.

Die oben anhand von Fig. 2 beschriebene Routine wird so lange wiederholt durch-geführt bis ein Ende der Anforderung erreicht ist. Ein Ende der Anforderung kann zum Beispiel durch einen Stillstand des Fahrzeugs (d.h. erfolgreiche Schnellbremsung) oder durch Aufheben des Betriebszustandes der Schnellbremsung vorliegen. Die Prüfungen, ob die aktuelle Bremswirkung ausreichend ist und ob ein erstes Bremssystem aktiviert werden sollte, erfolgen vorzugsweise (quasi-)kontinuierlich, beispielsweise im Sekundentakt.

**Fig. 3** zeigt eine andere Ausführungsform der Routine zur Steuerung oder Regelung der Bremsanlage 10 mittels der Steuerungs- oder Regelungsvorrichtung 12 für den Betriebsmodus einer Schnellbremsung. Gleiche bzw. analoge Prozessschritte sind dabei mit den gleichen Bezugsziffern gekennzeichnet und werden in Zusammenhang mit Fig. 3 nicht nochmals uim Detail erörtert.

Die in Fig. 3 veranschaulichte Routine unterscheidet sich von der oben erläuterten Routine von Fig. 2 insbesondere durch die Reihenfolge der Prozessschritte. So sind in der Ausführungsform von Fig. 3 die Prozessschritte S20, S22, S24 vor die Prozessschritte S16, S18 gezogen.

Im Einzelnen werden in Schritt S14 fortlaufend die aktuellen Fahrzeugbetriebsdaten erfasst und auch für den Betriebsmodus der Schnellbremsung zur Verfügung gestellt, der in Schritt S10 ausgelöst wird. Nach Auslösen der Schnellbremsung in Schritt S10 wird in einem Schritt S28 zunächst geprüft, ob überhaupt ein zweites Bremssystem 16 verfügbar ist, zum Beispiel eine elektrodynamische Bremse oder Retarderbremse. Dies geschieht zum Beispiel anhand einer Erfassung der aktuellen Betriebszustände (aktiv, deaktiviert, überhitzt, etc.) der Bremssysteme. Falls in Schritt S28 das zweite Bremssystem 16 nicht bzw. nicht mehr als verfügbar eingestuft wird, verzweigt die Prozedur unmittelbar zum letzten Schritt S26, in welchem das hochsichere erste Bremssystem 14 aktiviert wird und bis zum Ende des Betriebsmodus Schnellbremsung aktiv bleibt.

Ist ein zweites Bremssystem 16 verfügbar, wird dieses in Schritt S12 aktiviert. Anschließend wird die aktuell erreichbare Bremswirkung der Bremssysteme 14, 16, insbesondere der verfügbaren zweiten Bremssysteme 16 und vorzugsweise auch der verfügbaren ersten Bremssysteme 14 ermittelt (Schritt S20). Wird in Schritt S22 beurteilt, dass die aktuell erreichbare Bremswirkung herabgesetzt ist, so wird in Schritt S24 der Schwellenwert zum Beurteilen einer ausreichenden aktuellen Bremswirkung entsprechend angepasst. Liegt hingegen die aktuell erreichbare Bremswirkung in einem vorbestimmten Bereich, so bleibt der Schwellenwert zum Beurteilen einer ausreichenden aktuellen Bremswirkung unverändert und der Prozess geht direkt weiter zu Schritt S16.

In Schritt S16 wird die aktuelle Bremswirkung der Bremsanlage 10 erfasst. In Schritt S18 wird durch einen Vergleich mit dem - ggf. in Schritt S24 angepassten - Schwellenwert beurteilt, ob die erfasste aktuelle Bremswirkung für die geforderte Schnellbremsung ausreichend ist. Falls die durch das wenigstens eine zweite Bremssystem 16 erzielte Bremswirkung nicht ausreichend ist, muss in Schritt S26 - ersetzend oder ergänzend - das hochsichere erste Bremssystem 14 aktiviert bzw. die Rückhaltung des hochsicheren ersten Bremssystems 14 aufgehoben werden.

Wenn in Schritt S18 beurteilt wird, dass die durch das wenigstens eine zweite Bremssystem 16 erzielte Bremswirkung ausreichend ist, geht der Prozess zurück zu Schritt S28 oder alternativ zurück zu Schritt S20, um die Schleife wiederholt zu durchlaufen.

## Patentansprüche

1. Verfahren zur Steuerung oder Regelung einer Bremsanlage (10), insbesondere einer Bremsanlage eines Schienenfahrzeugs, wobei die Bremsanlage (10) wenigstens ein erstes Bremssystem (14), das ein die Anforderungen einer Schnellbremsung erfüllendes hohes Sicherheitsniveau aufweist, und wenigstens ein zweites Bremssystem (16) mit einem niedrigeren Sicherheitsniveau aufweist,
wobei nach dem Auslösen einer Schnellbremsung (Schritt S10) zunächst wenigstens ein zweites Bremssystem (16) aktiviert wird (Schritt S12) und danach wenigstens ein erstes Bremssystem (14) aktiviert wird (Schritt S26), wenn eine durch die Bremsanlage (10) erzeugte Bremswirkung einen Schwellenwert unterschreitet (Schritt S18),
**dadurch gekennzeichnet, dass**
dieser Schwellenwert an eine aktuell erreichbare Bremswirkung der Bremssysteme (14, 16) dynamisch angepasst wird (Schritt S24).

2. Verfahren nach Anspruch 1, bei welchem
das Verfahren einen Schritt des Erfassens der aktuellen, durch die aktivierten zweiten Bremssysteme (16) erzeugten Bremswirkung aufweist (Schritt S16).

3. Verfahren nach einem der vorhergehenden Ansprüche, bei welchem
das Verfahren einen Schritt des Erfassens der aktuell erreichbaren Bremswirkung wenigstens eines der ersten Bremssysteme (14) und/oder wenigstens eines der zweiten Bremssysteme (16) aufweist (Schritt S20).

4. Verfahren nach einem der vorhergehenden Ansprüche, bei welchem
das Verfahren einen Schritt des Erfassens von aktuell verfügbaren Bremssystemen (14, 16) aufweist (Schritt S28).

5. Verfahren nach einem der vorhergehenden Ansprüche, bei welchem
das Verfahren ferner einen Schritt des Erfassens von aktuellen Fahrzeugbetriebs-daten aufweist (Schritt S14); und
der Schwellenwert auch in Abhängigkeit von den erfassten Fahrzeugbetriebsdaten angepasst wird (Schritt S24).

6. Vorrichtung (12) zur Steuerung oder Regelung einer Bremsanlage (10), insbesondere einer Bremsanlage eines Schienenfahrzeugs, wobei die Bremsanlage (10) wenigstens ein erstes Bremssystem (14), das ein die Anforderungen einer Schnellbremsung erfüllendes hohes Sicherheitsniveau aufweist, und wenigstens ein zweites Bremssystem (16) mit einem niedrigeren Sicherheitsniveau aufweist,
wobei die Vorrichtung (12) aufweist:
eine Einrichtung zum Aktivieren wenigstens eines zweiten Bremssystems (16) nach dem Auslösen einer Schnellbremsung und Aktivieren wenigstens eines ersten Bremssystems (14), wenn eine durch die Bremsanlage (10) erzeugte Bremswirkung einen Schwellenwert unterschreitet;
**gekennzeichnet durch,**
eine Einrichtung zum dynamischen Anpassen des Schwellenwerts an eine aktuell erreichbare Bremswirkung der Bremssysteme (14, 16).

7. Vorrichtung nach Anspruch 6, welche
eine Einrichtung zum Erfassen der aktuellen, durch die aktivierten zweiten Bremssysteme (16) erzeugten Bremswirkung aufweist.

8. Vorrichtung nach Anspruch 6 oder 7, welche
eine Einrichtung zum Erfassen der aktuell erreichbaren Bremswirkung wenigstens eines der ersten Bremssysteme (14) und/oder wenigstens eines der zweiten Bremssysteme (16) aufweist.

9. Vorrichtung nach einem der Ansprüche 6 bis 8, wobei
die Vorrichtung (12) ferner eine Einrichtung zum Erfassen von aktuell verfügbaren Bremssystemen (14, 16) aufweist.

10. Bremsanlage (10) für ein Schienenfahrzeug, aufweisend eine Steuerungs- oder Regelungsvorrichtung (12) nach einem der Ansprüche 6 bis 9.

11. Bremsanlage nach Anspruch 10, bei welcher
die Steuerungs- oder Regelungsvorrichtung (12) mehrere Bremssysteme (14, 16) überwacht und ansteuert.

12. Schienenfahrzeug mit einer Bremsanlage (10) nach Anspruch 10 oder 11 und/ oder einer Steuerungs- oder Regelungsvorrichtung (12) nach einem der Ansprüche 6 bis 9.

13. Computerlesbares Speichermedium, auf dem ein auf einem Computersystem ausführbarer Programmcode gespeichert ist, der bei seiner Ausführung ein Verfahren nach einem der Ansprüche 1 bis 5 erzeugt.

14. Computerprogramm mit Codemitteln, die bei ihrer Ausführung auf einem Computersystem ein Verfahren nach einem der Ansprüche 1 bis 5 erzeugen.

## Claims

1. Method for the control or regulation of a brake assembly (10), in particular a brake assembly of a rail vehicle, wherein the brake assembly (10) comprises at least one first brake system (14) **characterised by** a high safety level that fulfils the demands of rapid braking, and at least one second brake system (16) **characterised by** a lower safety level,
wherein after initiating a rapid braking operation (Step S10), first at least a second brake system (16) is activated (Step S12) and thereafter at least a first brake system (14) is activated (Step S26), if the braking effect produced by the brake assembly (10) falls short of a threshold value (Step S18)
**characterised in that**
the said threshold value is dynamically adapted to a currently achievable braking effect of the brake systems (14, 16) (Step S24).

2. Method according to Claim 1, in which
the method comprises a step (Step S16) of detecting the current braking effect produced by the activated second brake system (16).

3. Method according to either of the preceding claims, in which
the method comprises a step (Step S20) of detecting the currently achievable braking effect of at least one of the first brake systems (14) and/or at least one of the second brake systems (16).

4. Method according to any of the preceding claims, in which
the method comprises a step (Step S28) of detecting currently available brake systems (14, 16).

5. Method according to any of the preceding claims, in which
the method also comprises a step (Step S14) of detecting current vehicle operation data; and
the threshold value is also adapted (Step S24) as a function of the vehicle operation data detected.

6. Device (12) for controlling or regulating a brake assembly (10), in particular a brake assembly of a rail vehicle, wherein the brake assembly (10) comprises at least one first brake system (14) **characterised by** a high safety level that fulfils the demands of rapid braking, and at least one second brake system (16) **characterised by** a lower safety level,
wherein the device (12) comprises
a device for activating at least one second brake system (16) after the initiation of a rapid braking operation and activating at least one first brake system (14), ;
**characterised by**
a device for the dynamic adaptation of the threshold to a currently achievable braking effect of the brake systems (14, 16).

7. Device according to Claim 6, which
comprises a device for detecting the braking effect currently produced by the activated second brake system (16).

8. Device according to Claims 6 or 7, which
comprises a device for detecting the currently achievable braking effect of at least one of the first brake systems (14) and/or at least one of the second brake systems (16).

9. Device according to any of Claims 6 to 8, wherein
the device (12) also comprises a device for detecting currently available brake systems (14, 16).

10. Brake assembly (10) for a rail vehicle, comprising a control or regulation unit (12) according to any of Claims 6 to 9.

11. Brake assembly according to Claim 10, in which
the control or regulation device (12) monitors and controls a plurality of brake systems (14, 16).

12. Rail vehicle with a brake assembly (10) according to Claims 10 or 11 and/or a control or regulation device (12) according to any of Claims 6 to 9.

13. Computer-readable storage medium, on which a program code that can be carried out by a computer system is stored, which when carried out implements a method according to any of Claims 1 to 5.

14. Computer program with code means, which when run on a computer system implement a method according to any of Claims 1 to 5.

## Revendications

1. Procédé de commande ou de régulation d'une installation (10) de freinage, notamment d'une installation de freinage d'un véhicule ferroviaire, dans laquelle l'installation (10) de freinage a au moins un premier système (14) de freinage, qui a un niveau de sécurité haut satisfaisant les demandes d'un freinage rapide et au moins un deuxième système (16) de freinage ayant un niveau de sécurité plus bas,
dans lequel, après le déclenchement d'un freinage rapide (stade S10), on active (stade S12) d'abord au moins un deuxième système (16) de freinage et on active (stade S26) ensuite au moins un premier système (14) de freinage, si un effet de freinage produit par l'installation (10) de freinage est inférieure (stade S18) à une valeur de seuil,
**caractérisé en ce que**
l'on adapte (stade S24) dynamiquement la valeur de seuil à un effet de freinage pouvant être obtenu instantanément des systèmes (14, 16) de freinage.

2. Procédé suivant la revendication 1, dans lequel
le procédé a (stade S16) un stade de détection de l'effet de freinage instantané, produit par les deuxièmes systèmes (16) de freinage activés.

3. Procédé suivant l'une des revendications précédentes, dans lequel
le procédé a (stade S20) un stade de détection de l'effet de freinage pouvant être atteint instantanément au moins de l'un des premiers systèmes (14) de freinage et/ou au moins de l'un des deuxièmes systèmes (16) de freinage.

4. Procédé suivant l'une des revendications précédentes, dans lequel
le procédé a (stade S28) un stade de détection des systèmes (14, 16) de freinage disponibles instantanément.

5. Procédé suivant l'une des revendications précédentes, dans lequel
le procédé a (stade S14) en outre un stade de détection des données de fonctionnement du véhicule instantanées ; et
on adapte (stade S24) la valeur de seuil également en fonction des données de fonctionnement du véhicule, qui sont détectées.

6. Installation (12) de commande ou de régulation d'une installation (10) de freinage, notamment d'une installation de freinage d'un véhicule ferroviaire, dans lequel l'installation (10) de freinage a au moins un premier système (14) de freinage, qui a un niveau de sécurité haut satisfaisant les exigences d'un freinage rapide, et au moins un deuxième système (16) de freinage ayant un niveau de sécurité plus bas,
dans laquelle l'installation (12) a :
un dispositif d'activation d'au moins un deuxième système (16) de freinage après le déclenchement d'un freinage rapide et une activation d'au moins un premier système (14) de freinage, si un effet de freinage, produit par l'installation (10) de freinage est inférieur à une valeur de seuil ;
**caractérisée par**
un dispositif d'adaptation dynamique de la valeur de seuil à un effet de freinage pouvant être atteint instantanément des systèmes (14, 16) de freinage.

7. Installation suivant la revendication 6, qui,
a un dispositif de détection de l'effet de freinage instantané produit par les deuxièmes systèmes (16) de freinage activés.

8. Installation suivant la revendication 6 ou 7, qui
a un dispositif de détection de l'effet de freinage, pouvant être atteint instantanément, d'au moins l'un des premiers systèmes (14) de freinage et/ou d'au moins l'un des deuxièmes systèmes (16) de freinage.

9. Installation suivant l'une des revendications 6 à 8, dans laquelle
l'installation (12) a en outre un dispositif de détection de systèmes (14, 16) de freinage disponibles instantanément.

10. Installation (10) de freinage d'un véhicule ferroviaire, comportant une installation (12) de commande ou de régulation suivant l'une des revendications 6 à 9.

11. Installation de freinage suivant la revendication 10, dans laquelle
l'installation (12) de commande ou de régulation contrôle et commande plusieurs systèmes (14, 16) de freinage.

12. Véhicule ferroviaire ayant une installation (10) de freinage suivant la revendication 10 ou 11 et/ou une installation (12) de commande ou de régulation suivant l'une des revendications 6 à 9.

13. Support de mémoire, déchiffrable par ordinateur, sur lequel est mis en mémoire un code de programme, qui peut être exécuté sur un système d'ordinateur et dont l'exécution produit un procédé suivant l'une des revendications 1 à 5.

14. Programme d'ordinateur ayant des moyens de code qui, lors qu'ils sont exécutés sur un système d'ordinateur, produisent un procédé suivant l'une des revendications 1 à 5.
